# FASCICULE DE BREVET EUROPEEN

(11) **EP 2 250 048 B1**
(45) Date de publication et mention de la délivrance du brevet: **17.08.2011**
(21) Numéro de dépôt: 09723301.9
(22) Date de dépôt: 05.03.2009
(51) Int. Cl.: B60R 3/00, B60R 19/02, B62D 25/08, B60R 19/24, B62D 65/16, B62D 25/22

(54) **AGENCEMENT DE RENFORT DE BOUCLIER DE VEHICULE AUTOMOBILE**
ANORDNUNG ZUR VERSTÄRKUNG EINES STOSSFÄNGERS FÜR EIN MOTORFAHRZEUG
ARRANGEMENT FOR REINFORCING A MOTOR VEHICLE BUMPER

(30) Priorité: 05.03.2008 FR 0851431
(43) Date de publication de la demande: 17.11.2010
(73) Titulaire: Renault S.A.S., 92100 Boulogne-Billancourt (FR)
(72) Inventeur: PARFUT, Sylvain, F-92500 Rueil Malmaison (FR); CAILLEAUX, Pierre, F-91410 Corbreuse (FR)
(86) Numéro de dépôt international: PCT/FR2009/050363
(87) Numéro de publication internationale: WO 2009/115740

(56) Documents cités:
- JP-U- 3 019 752
- JP-U- 3 120 249
- US-A1- 2006 145 516

## Description

La présente invention concerne un agencement de renfort de bouclier de véhicule automobile, et notamment un agencement de renfort de bouclier pour véhicule automobile, dans lequel au moins un élément de renfort est soudé sur un moyen formant traverse, cet élément de renfort étant apte à supporter le bouclier du véhicule, et apte à encaisser des efforts sensiblement longitudinaux.

Des véhicules à bennes de chargement, couramment appelés « pick-up », comportent principalement une caisse formant un poste de pilotage, et une benne solidarisée à cette caisse et formant un espace de chargement. Un bouclier arrière est disposé à l'extrémité arrière de cette benne, conformément à l'ensemble des véhicules automobiles, afin de pouvoir encaisser des petits chocs avec des obstacles ou des véhicules sans déformer la structure portant ce bouclier. De façon connue, des éléments de renfort sont disposés à l'intérieur du bouclier pour éviter la déformation du bouclier en dessous d'un effort longitudinal déterminé.

En outre, dans ces véhicules, le plancher de chargement de la benne est situé à une hauteur supérieure à celle du poste de conduite, et les utilisateurs doivent prendre appui sur un marche pied pour pouvoir monter dans la benne. Lorsqu'aucun marche pied spécifique n'a été développé, les utilisateurs prennent appui sur le bouclier. Un risque existe alors de déformer le bouclier sous cet effort vertical.

La publication JP 03 019752 U divulgue un agencement d'apres le preambule de la revendication 1.

La présente invention vise à proposer un agencement de renfort tels qu'évoqué ci dessus, aptes à résister au mieux aux efforts longitudinaux et verticaux. Ainsi, l'élément de renfort de l'agencement de renfort de bouclier comporte une partie supérieure formant une zone de marche pied s'étendant sous la partie supérieure du bouclier, apte à encaisser des efforts sensiblement verticaux.

Selon différentes caractéristiques :
- l'élément de renfort est soudé sur une pièce formant doublure de la traverse.
- l'élément de renfort est soudé sur un plan incliné formé sur la doublure de la traverse, de sorte que le plan de fixation de l'élément de renfort sur la traverse extrême est légèrement incliné par rapport à un plan d'orientation verticale et transversale.
- l'élément de renfort présente une partie inférieure d'accroche du bouclier, sensiblement en forme de U, et apte à encaisser les efforts sensiblement longitudinaux.
- au moins une équerre de renfort est disposée à l'intérieur de l'élément de renfort de bouclier pour le rigidifier, cette équerre étant soudée sous la zone de marche pied du renfort de bouclier, sensiblement pour toute sa dimension longitudinale, ainsi que sur la partie d'accroche de cet élément de renfort de bouclier, sur la face qui s'étend en regard de la partie supérieure du renfort de bouclier.
- l'agencement comporte deux éléments de renfort de bouclier, disposés sensiblement aux extrémités latérales de la traverse extrême.

L'invention concerne également un véhicule automobile, du type comportant un agencement de renfort tel qu'évoqué ci-dessus, et dans lequel une plaque de police est disposée dans l'espace entre les deux éléments de renfort de bouclier.

D'autres avantages et caractéristiques de l'invention apparaîtront à la lecture de la description qui va suivre, pour la compréhension de laquelle on se reportera aux figures annexées, parmi lesquelles :
- la figure 1 est une représentation schématique d'un arrière de véhicule automobile sur lequel sont disposés des éléments de renfort de bouclier selon l'invention, vue de l'arrière droite du véhicule,

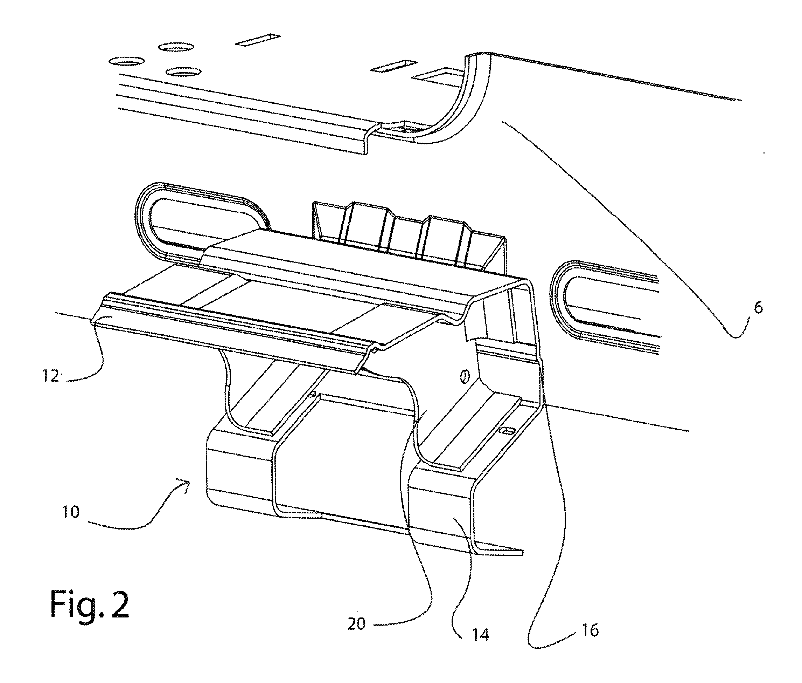

- la figure 2 est une représentation schématique, vue de l'arrière gauche du véhicule, d'un élément de renfort représenté à la figure 1,
- la figure 3 est une vue en section de la figure 2,

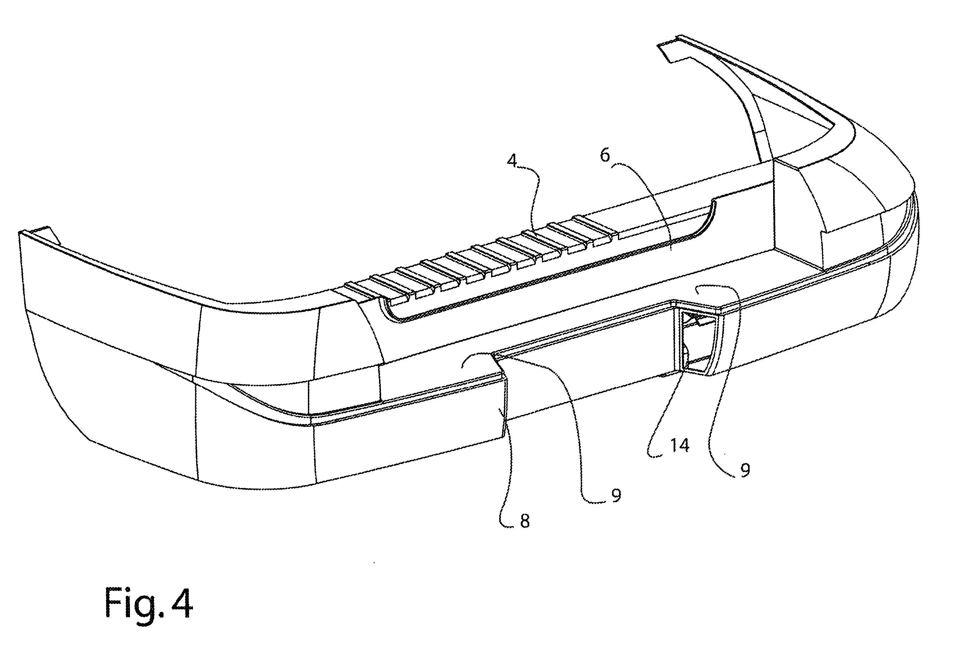

- la figure 4 est une représentation schématique équivalente à la figure 1, avec la représentation du bouclier.

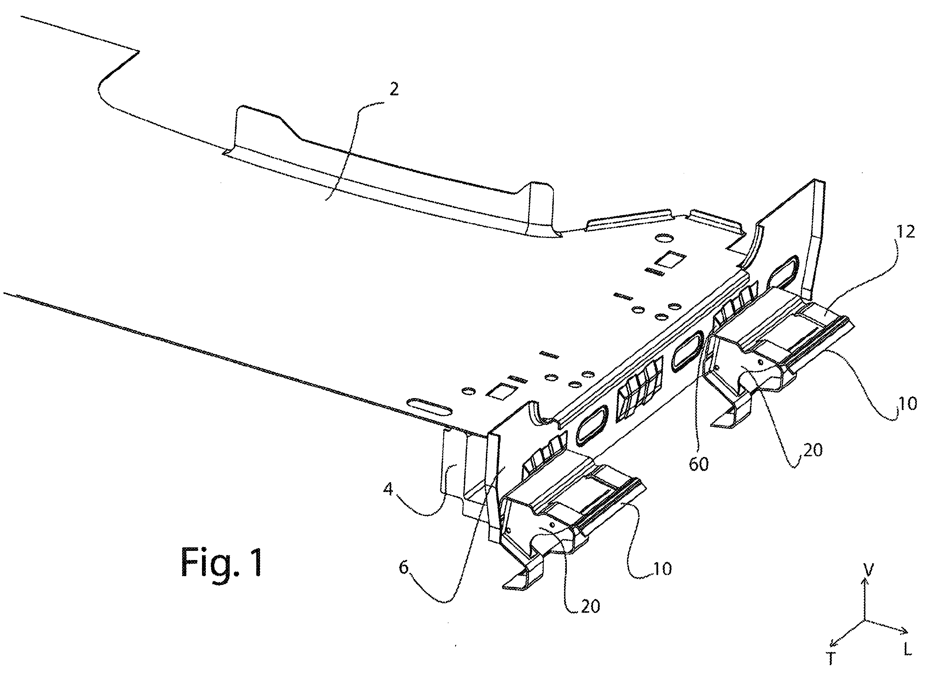

Dans la description qui va suivre, et conformément à une orientation classiquement utilisée dans el domaine automobile, les termes longitudinal, vertical et transversal seront compris à la lecture du trièdre L, V, T représenté à la figure 1.

Tel que représenté sur les figures, l'extrémité arrière du plancher de chargement 2 est renforcée par une traverse extrême 4, transversale au véhicule, sous la forme d'un corps creux 5 disposé sous le plancher 2. Ce corps creux 5 est fermé par une doublure 6 de traverse d'orientation générale sensiblement verticale. La traverse extrême 4 et la doublure 6 associée sont soudées sous le plancher de chargement 2 pour rigidifier l'ensemble. Au moins un élément de renfort de bouclier 10 est solidarisé sur la doublure de traverse 6.

Cet élément de renfort de bouclier 10 présente une forme spécifique, apte à encaisser à la fois les chocs longitudinaux subis par le bouclier 8, et les efforts générés par l'utilisateur lorsqu'il prend appui sur le bouclier 8. Ainsi, une partie supérieure du renfort forme une zone de marche pied 12 s'étendant sur toute la dimension longitudinale du bouclier, afin d'offrir une grande surface d'appui, juste sous la partie supérieure 9 de ce bouclier 8.

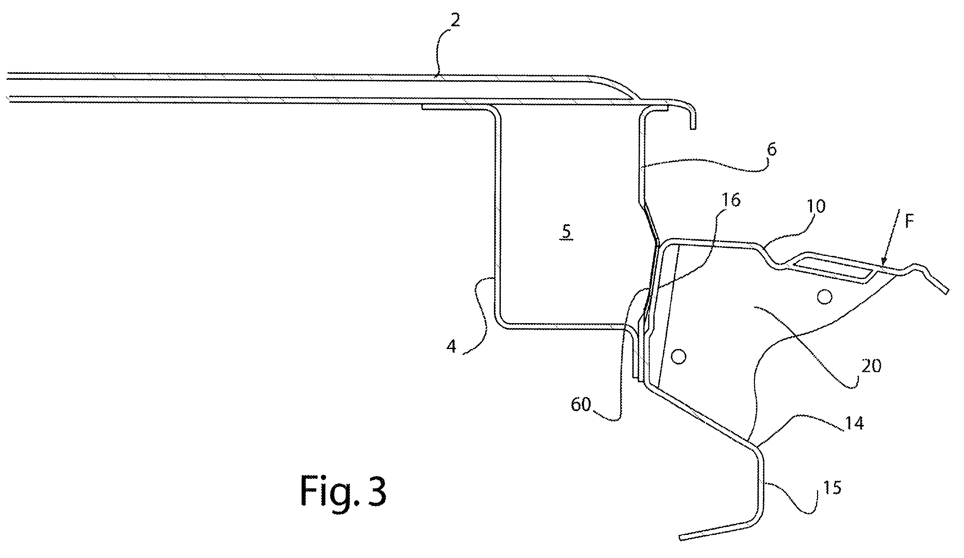

D'autre part, une partie inférieure du renfort de bouclier 10 permet la fixation de la peau du bouclier dans son extrémité basse. Cette partie inférieure formant une partie d'accroche du bouclier 14, présente une forme de pontet sensiblement en U, dans une forme apte à encaisser les chocs longitudinaux, la base 15 du U étant orientée face à l'arrière du véhicule. Tel que représenté figure 3 notamment, l'extrémité arrière de cette partie d'accroche 14 est en retrait de l'extrémité arrière de la zone de marche pied 12, mais il sera compris qu'un autre dessin de bouclier pourrait amener l'élément de renfort de bouclier 10 à avoir des dimensions longitudinales différentes.

Enfin, une partie intermédiaire lie la partie supérieure et la partie inférieure, de sorte à former un élément de renfort 10 monopièce, muni d'une zone de marche pied 12, apte à encaisser plus spécifiquement les efforts verticaux, et d'une partie d'accroche du bouclier 14, apte à encaisser plus spécifiquement les efforts longitudinaux. Cette partie intermédiaire forme une partie de fixation 16 du renfort sur la doublure 6 de traverse extrême, et est soudée sur cette doublure 6. Avantageusement, et tel que représenté à la figure 1 ou 3, cette partie de fixation 16 est solidarisée à la doublure 6 au niveau d'un plan incliné 60 de cette doublure 6.

Le plan de fixation comprenant le plan incliné 60 est déterminé selon l'invention pour être sensiblement parallèle à l'effort F représentatif de l'effort transmis par un utilisateur prenant appui sur le bouclier 8 comme un marche pied, effort F représenté à titre d'exemple figure 3.

L'orientation de l'élément de renfort 10 est étudiée dans son ensemble pour répondre à cet effort spécifique au marche pied, et présente d'une part un plan de fixation de l'élément de renfort 10 sur la doublure de traverse 6 incliné par rapport au plan vertical, d'autre part une zone de marche pied 12 inclinée par rapport au plan horizontal pour être sensiblement perpendiculaire à l'effort F de l'utilisateur. Ainsi, l'orientation des plans de reprise d'effort est optimisée pour encaisser les efforts de montée de l'utilisateur dans la benne du véhicule, et éviter ainsi une déformation du marche pied et à terme une détérioration du bouclier 8.

Au moins une équerre de renfort 20 est disposée à l'intérieur de l'élément de renfort de bouclier 10 pour le rigidifier. Cette équerre 20 est soudée sous la zone de marche pied 12 du renfort de bouclier 10, sensiblement pour toute sa dimension longitudinale, ainsi que sur la partie d'accroche 14 de cet élément de renfort de bouclier, sur la face qui s'étend en regard de la partie supérieure du renfort de bouclier. Cette équerre 20 est laissée libre en regard de la partie intermédiaire de l'élément de renfort de bouclier 10, pour permettre l'absorption d'efforts lors des chocs longitudinaux.

Cette architecture permet de satisfaire le cahier des charges de petit choc et sert donc de zone fusible, apte à empêcher la déformation de la structure du véhicule et de la doublure 6 de traverse extrême en cas de petit choc.

Avantageusement, et tel que représenté à la figure 1, deux éléments de renforts de bouclier 10 sont fixés sur la traverse extrême 4, sensiblement aux extrémités latérales de cette traverse 4. L'espace entre les deux renforts 10 permet la mise en place de la plaque de police. Toutefois il sera compris que le nombre et les dimensions des éléments de renfort pourraient varier sans sortir du contexte de l'invention, dès lors que la section de cet élément de renfort permet conformément à l'invention de prendre en charge l'absorption des efforts longitudinaux et des efforts verticaux générés sur le bouclier.

## Revendications

1. Agencement de renfort de bouclier pour véhicule automobile, dans lequel au moins un élément de renfort (10) est soudé sur un moyen formant traverse (4, 6), cet élément de renfort de bouclier (10) étant apte à supporter le bouclier (8) du véhicule, et apte à encaisser des efforts sensiblement longitudinaux, l'élément de renfort de bouclier (10) comporte une partie supérieure formant une zone de marche pied (12) s'étendant sous la partie supérieure (9) du bouclier (8), apte à encaisser des efforts sensiblement verticaux, **caractérisé en ce que** l'élément de renfort (10) est soudé sur un plan incliné (60) formé sur une doublure (6) de la traverse, de sorte que le plan de fixation de l'élément de renfort (10) sur la traverse extrême (4) est légèrement incliné par rapport aux plans d'orientation verticale et transversale pour être sensiblement parallèle à l'effort (F) représentatif de l'effort transmis par un utilisateur prenant appui sur le bouclier (8) comme un marche pied.

2. Agencement selon la revendication 1, **caractérisé en ce que** l'élément de renfort (10) présente une partie inférieure d'accroche du bouclier (14), en forme de U, et apte à encaisser les efforts sensiblement longitudinaux.

3. Agencement selon la revendication précédente, **caractérisé en ce qu'**au moins une équerre de renfort (20) est disposée à l'intérieur de l'élément de renfort de bouclier (10) pour le rigidifier, cette équerre (20) étant soudée sous la zone de marche pied (12) du renfort de bouclier (10), sensiblement pour toute sa dimension longitudinale, ainsi que sur la partie d'accroche (14) de cet élément de renfort de bouclier (10), sur la face qui s'étend en regard de la partie supérieure du renfort de bouclier (10).

4. Agencement de renfort selon l'une des revendications précédentes, **caractérisé en ce qu'**il comporte deux éléments de renfort de bouclier (10), disposés sensiblement aux extrémités latérales de la traverse extrême (4).

5. Véhicule automobile, du type comportant un agencement de renfort selon la revendication précédente, **caractérisé en ce qu'**une plaque de police est disposée dans l'espace entre les deux éléments de renfort de bouclier (10).

## Claims

1. Arrangement for reinforcing a motor vehicle bumper in which at least one reinforcing element (10) is welded to crossmember means (4, 6), this bumper-reinforcing element (10) being adapted to support the vehicle bumper (8) and to absorb substantially longitudinal forces, the bumper-reinforcing element (10) having an upper portion forming a step region (12) which extends below the upper portion (9) of the bumper (8) and is adapted to absorb substantially vertical forces, **characterized in that** the reinforcing element (10) is welded to an inclined plane (60) on a crossmember lining so that the fixing plane of the reinforcing element (10) on the end crossmember (4) is slightly inclined relative to the vertical and transverse planes in order to be substantially parallel to the force (F) representing a force transmitted by a user bearing down on the bumper (8) like a step.

2. Arrangement according to claim 1, **characterized in that** the reinforcing element (10) has a U-shaped lower part for attaching the bumper (14) adapted to absorb substantially longitudinal forces.

3. Arrangement according to the preceding claim, **characterized in that** at least one reinforcing bracket (20) is disposed inside the bumper reinforcing element (10) to stiffen it, this bracket (20) being welded under the step area (12) of the bumper reinforcement (10) over substantially all its longitudinal dimension and to the face of the attachment part (14) of this bumper reinforcing element (10) that faces the upper part of the bumper reinforcement (10).

4. Reinforcing arrangement according to any of the preceding claims, **characterized in that** it includes two bumper reinforcing elements (10) disposed substantially at the lateral ends of the end crossmember (4).

5. Automobile vehicle of the type including a reinforcing arrangement according to the preceding claim, **characterized in that** a number plate is disposed in the space between the two bumper reinforcing elements (10).

## Patentansprüche

1. Anordnung zur Verstärkung eines Stoßfängers für ein Kraftfahrzeug, wobei mindestens ein Verstärkungselement (10) mit einem einen Querträger (4, 6) bildenden Mittel verschweißt ist, wobei dieses Stoßfängerverstärkungselement (10) den Stoßfänger (8) des Fahrzeugs stützen kann und im Wesentlichen in Längsrichtung verlaufende Kräfte aufnehmen kann,
das Stoßfängerverstärkungselement (10) einen oberen Teil aufweist, der einen Trittbrettbereich (12) bildet, welcher sich unter dem oberen Teil (9) des Stoßfängers (8) erstreckt und im Wesentlichen vertikale Kräfte aufnehmen kann, **dadurch gekennzeichnet, dass** das Verstärkungselement (10) auf einer an einem Querträgereinsatz (6) gebildeten geneigten Ebene (60) verschweißt ist, so dass die Ebene der Befestigung des Verstärkungselements (10) an dem Endquerträger (4) bezüglich der Ebenen vertikaler und in Querrichtung verlaufender Ausrichtung leicht geneigt ist, damit sie im Wesentlichen parallel zu einer Kraft (F) verläuft, die die durch einen Benutzer, der sich auf dem Stoßfänger (8) wie auf einem Trittbrett abstützt, übertragene Kraft darstellt.

2. Anordnung nach Anspruch 1, **dadurch gekennzeichnet, dass** das Verstärkungselement (10) einen U-förmigen unteren Teil (14) zum Anbringen des Stoßfängers aufweist, der die im Wesentlichen in Längsrichtung verlaufenden Kräfte aufnehmen kann.

3. Anordnung nach dem vorhergehenden Anspruch, **dadurch gekennzeichnet, dass** mindestens ein Verstärkungswinkel (20) im Inneren des Stoßfängerverstärkungselements (10) angeordnet ist, um ihn zu versteifen, wobei dieser Winkel (20) im Wesentlichen über seine ganze Längsabmessung unter dem Trittbrettbereich (12) der Stoßfängerverstärkung (10) sowie auf dem Teil (14) zum Anbringen dieses Stoßfängerverstärkungselements (10) auf der Fläche, die sich gegenüber dem oberen Stoßfängerverstärkungsteil (10) erstreckt, verschweißt ist.

4. Verstärkungsanordnung nach einem der vorhergehenden Ansprüche, **dadurch gekennzeichnet, dass** sie zwei Stoßfängerverstärkungselemente (10) umfasst, die im Wesentlichen an den lateralen Enden des Endquerträgers (4) angeordnet sind.

5. Kraftfahrzeug jener Art, die eine Verstärkungsanordnung nach dem vorhergehenden Anspruch umfasst, **dadurch gekennzeichnet, dass** ein Kennzeichenschild in dem Raum zwischen den beiden Stoßfängerverstärkungselementen (10) angeordnet ist.
